Europäisches Patentamt

European Patent Office

Office européen des brevets

(11) Publication number: 0 449 108 A2

# EUROPEAN PATENT APPLICATION

(21) Application number: 91104406.3

(22) Date of filing: 21.03.91

(51) Int. Cl.5: H04N 9/29

(30) Priority: 27.03.90 GB 9006753
21.08.90 GB 9018297

(43) Date of publication of application:
02.10.91 Bulletin 91/40

(84) Designated Contracting States:
AT BE CH DE DK ES FR GB GR IT LI LU NL SE

(71) Applicant: FERGUSON LIMITED
Cambridge House, 270 Great Cambridge
Road
Enfield, Middlesex, EN1 1ND(GB)

(72) Inventor: Price, Robert James
8 Field House, Sebastopol Road
Edmonton, London N9 0PS(GB)

(74) Representative: Einsel, Robert, Dipl.-Ing.
Deutsche Thomson-Brandt GmbH Patent-
und Lizenzabteilung Göttinger Chaussee 76
W-3000 Hannover 91(DE)

(54) Degaussing circuit for a picture tube.

(57) A degaussing circuit for a picture tube according
to prior art includes a first capacitor C1 charged by a
first voltage via a first charging path and a first
switch T1 connecting the degaussing coil DC to said
capacitor C1. It is an object of the present invention
to simplify said circuit and to modify it in such a way
that it can be used in several different ways of
degaussing.

According to the invention said first switch is
formed by an antiparallel circuit of a diode D2 and a
transistor T1 whereas a second capacitor C2 is con-
nected to the base of said tranistor T1 and charged
by a second voltage U2 via a second charging path
R3.

Fig.1

The invention relates to a degaussing circuit for a picture tube in a television device of the so-called resonant type. In such a circuit a capacitor is charged by a first voltage via a first charging path. The capacitor is further connected via a switch to the degaussing coil. The capacitor and the degaussing coil form a resonant circuit. Due to the energy stored within the capacitor a degaussing current flows within said circuit. The amplitude of said current decreases due to losses within the circuit until the energy is dissipated and the current smoothly goes to zero.

A degaussing circuit of this kind is described in US-PS 4 734 620. Within this known circuit the switch is constituted by a parallel circuit of a thyristor and a diode the thyristor being fired by an one-shot multivibrator.

It is an object of the present invention to simplify said circuit and to modify it in such a way that it can be used in several different ways of degaussing.

According to the invention said switch is formed by an antiparallel circuit of a diode and a transistor. A second capacitor is connected to the base of said transistor and charged by a second voltage via a second charging path.

The circuit according to the invention does not need a thyristor for the first switch but only a transistor which is cheaper and more easily to find than a thyristor. Especially the degaussing circuit can operate in different modes according to the special requirements for degaussing. For example the circuit can operate always at receiver switch on. It may be controlled by software according to special rules or a special program. Furthermore it can operate automatically at defined intervals for achieving a periodic degaussing operation.

According to one embodiment of the invention said first voltage is derived from the line flyback pulse at the collector of the power switching transistor of the line deflection output stage. This version is useful if as in many cases the focus voltage or the voltage at grid 2 (G2) of the picture tube which is used according to prior art is not attackable because the elements are sealed within a unit.

In one form of the invention means are provided for securing that degaussing operation occurs only during vertical flyback period. By this solution it is achieved that degaussing operation does not become visible on the screen. This is advantageous especially in case the degaussing operation is repeated at intervals. Furthermore no interference does occur within the deflection raster if the first voltage is derived from the line output transistor. For enabling degaussing operation only during vertical flyback period a source of vertical flyback pulses is additionaly connected to the base of said transistor.

According to a further embodiment of the invention a second switch is conected parallel to said second capacitor and means are provided for opening said switch for initiating degaussing operation. Said second switch allows different modes of operation, for example by opening said switch always after receiver switch on or by actuating said switch by software or by opening or omitting said switch for a periodic degaussing operation at intervals.

In one form of the invention a diac is conected between said second capacitor and the base of said transistor said diac forming a threshold circuit within the base drive circuit.

In order that the invention may more readily be understood, a discription is now given by way of example only reference being made to the drawing. Within the drawing

Fig. 1 shows a degaussing circuit according to the invention,

Fig. 2 and 3 show waveforms for explanation of the operation of the circuit according to Fig. 1 and

Fig. 4 - 6 show a further embodiment of the invention.

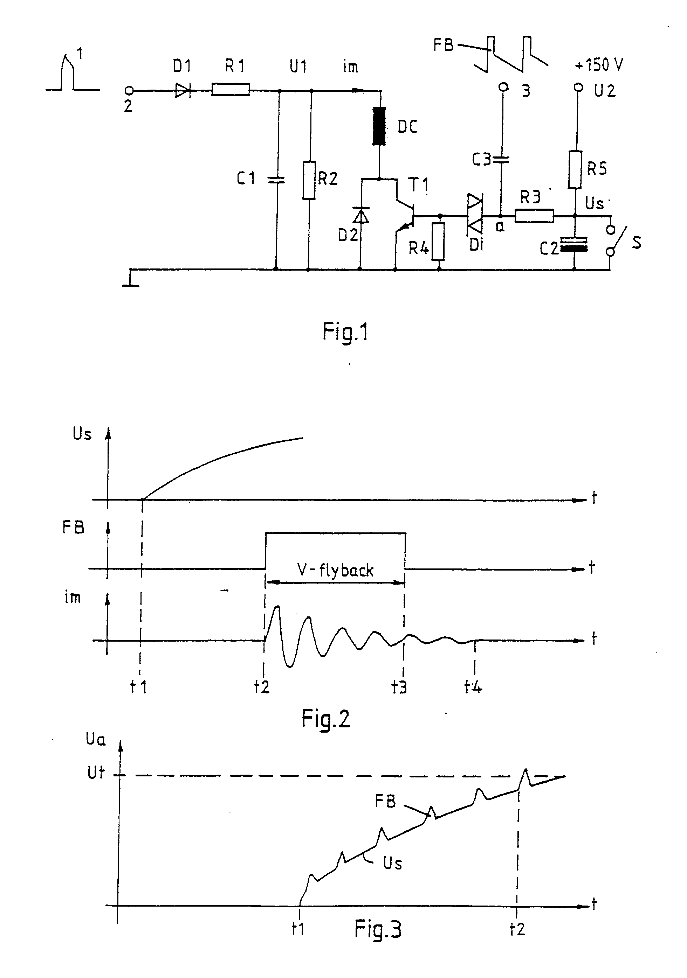

In Fig. 1 a line flyback pulse 1 with an amplitude of about 1.200 V is derived from the collector of the line output switching transistor not shown. This pulse 1 is fed from terminal 2 via diode D1 and resistor R1 to capacitor C1. Capacitor C1 is charged to a voltage U1 of about 1.000 V. On the other hand capacitor C2 is charged via resistor R3 from a positiv voltage U2 of +150 V. The time constant C2 * R3 is sufficiently long to allow C1 to reach 1.000 V before the increasing voltage Us at capacitor C2 can fire via resistor R2 diac Di and switch on transistor T1. When diac Di fires, T1 conducts so that C1 discharges through the degaussing coil DC connected parallel to C1 via the first switch constituted by transistor T1 and the antiparallel shunted diode D2. The degaussing coil DC resonates with C1 so that an oscillatory current im flows via D2 and T1. This current im decays to zero whereby the degaussing action occurs. Time constant R2 * C2 is long enough to give a base current pulse to T1 sufficient long to allow the degaussing current to decay smoothly to zero. The switch S parallel to C2 is closed to stop the degaussing operation and to prevent further degaussing action if required.

Additionaly a vertical scan waveform with a vertical flyback pulse FB is fed from terminal 3 via capacitor C3 to the junction a of diac Di and resistor R2. Flyback pulse FB assures that degaussing operation only occurs during vertical retrace or flyback. If for example the degaussing operation is initiated by opening switch S and charging C2 by U2 the degaussing operation itself only can occur during vertical flyback period so that visible interference within the reproduced picture is prevented.

Fig. 2 shows different waveforms in Fig. 1. Assume that C1 is already charged to U1 and switch S is closed so that Us is zero and Di does not fire. T1 is cut off and no degaussing current im can flow through DC. At time t1 switch S is opened for initiating degaussing operation. Voltage Us at C2 increases by the charging current from V2 via R3. At time t2 the flyback pulse FB occurs additionaly at point a. In this moment Di fires and transistor T1 becomes conductive so that degaussing current im is initiated. At t3 flyback pulse FB disappears. It may be that after flyback from t3 - t4 a small degaussing current flows. However the amplitude of this current is so small that no visible interference occurs on the screen.

Fig. 3 shows waveforms for illustrating the control of transistor T1 by voltage Us. Up to t1 switch S is closed so that Us is zero. At t1 switch S is opened for initiating operation. Now C2 is charged by U2 via R5 so that Us increases. Voltage Ua at point a is a combination of voltage Us coming from C2 and flyback pulse FB coming from terminal 3 via C3. Up to t2 voltage Ua does not reach threshold value Ut defined by diac Di so that diac does not fire and transistor T1 remains cut off. At t2 Ua reaches threshold value Ut at which diac Di fires so that transistor T1 is turned on in the described way. As can be seen degaussing operation always is initiated only during vertical flyback by pulse FB. In the absence of frame flyback pulse FB diac Di would fire at a later time when Us without pulses FB reaches the freshold value Ut. This means that the circuit will initiate degaussing operation even if frame flyback pulse FB is not fed to point a.

The circuit shown can operate in the following different modes:

If it is desired that degaussing operation occurs always after receiver switch on than switch S normally closed is opened at receiver switch on so that the degaussing operation occurs in the described way. At the end of degaussing operation switch S is closed to prevent further undesired degaussing. In a similar way switch S can be operated by software. In this case degaussing operation can occur according to special rules, according to a special program or upon special events. Degaussing operation is always initiated by opening switch $ and terminated by closing switch S. By leaving switch $ open or by omitting switch $ the circuit will continue to operate at regular intervals automatically, for example in distances of some minutes. Thus if the tube becomes magnetised for whatever reason during operation purity will be restored automatically. Also if the tube becomes so strongly magnetised that one degaussing cycle will not clear it, than, since the degaussing tends to be cumulative, purity will eventually be restored. If switch $ remains opened the circuit repeats automatically the following operation. C2 is charged by 02 until Us together with FB can fire Di and switch on transistor T1 for initiating im. C2 is discharged by the base drive current for T1 until T1 becomes non-conductive and im becomes zero. C2 now discharged is again charged until Us and FB again fire Di and switch on T1 initiating im.

In a practically realized version of the circuit according to Fig. 1 the elements shown had the following values:

| | |
|---|---|
| diode D1: | type BY133 |
| diode D2: | type BY133 |
| resistor R1: | 220 kOhm |
| resistor R2: | 10 MOhm |
| resistor R3: | 12 Ohm |
| resistor R4: | 100 Ohm |
| resistor R5: | 2,7 MOhm |
| capacitor C1: | 0,22 - 0,47 $\mu$F |
| capacitor C2: | 100 $\mu$F |
| capacitor C3: | 10 nF |
| transistor T1: | type TIPL761 |

According to another embodiment of the invention means are provided for detecting a movement of the cabinet of the device and/or changes of magnetic field within the device said means initating degaussing operation.

This embodiment is based on the following considerations. If the cabinet of the receiver is moved then the relationship between magnetic earth field and the receiver cabinet is changed and consequently the picture tube will be magnetized so that the colour purity of the displayed picture is degraded. In order to compensate for such disturbances said movement or said changes in magnetic field are detected to initiate the degaussing operation. It may be that during the degaussing operation a brief visible disturbance arises due to the degaussing current. However, this short disturbance is mor acceptable than a degraded picture for the whole time of operation after movement or changes in magnetic field. For initiating the degaussing operation a standby circuit may be used so that degaussing operation upon detection of movement of the cabinet or upon detection of change of magnetic field is initiated even if the receiver is in the standby mode.

Preferably said means for detecting movement of the cabinet is in addition or instead of detection of changes in the local magnetic field. This is based on the fact that generally in case of movement the relationship between the local magnetic field of the earth and a magnetic sensor is changed so that output signal of said magnetic sensor varies with movement of the cabinet. This variation can be used for initiating degaussing operation.

Magnetic detectors will also detect changes in the local magnetic field due the proximity of magnets such as those contained in external loudspeakers or toys.

Sensors for detecting movement are well known and may take the form of what are generally called "gyros". Such gyros and their application for detecting movement of a camera are more fully described in US-PS 4 612 575. Examples of other movement detecting sensors are pendulum devices and trembler switches, for instance mercury tilt switches. A sensor for detecting magnetic field even in case receiver is not moved is for example a so-called electronic compass as desribed in WO 88/06274.

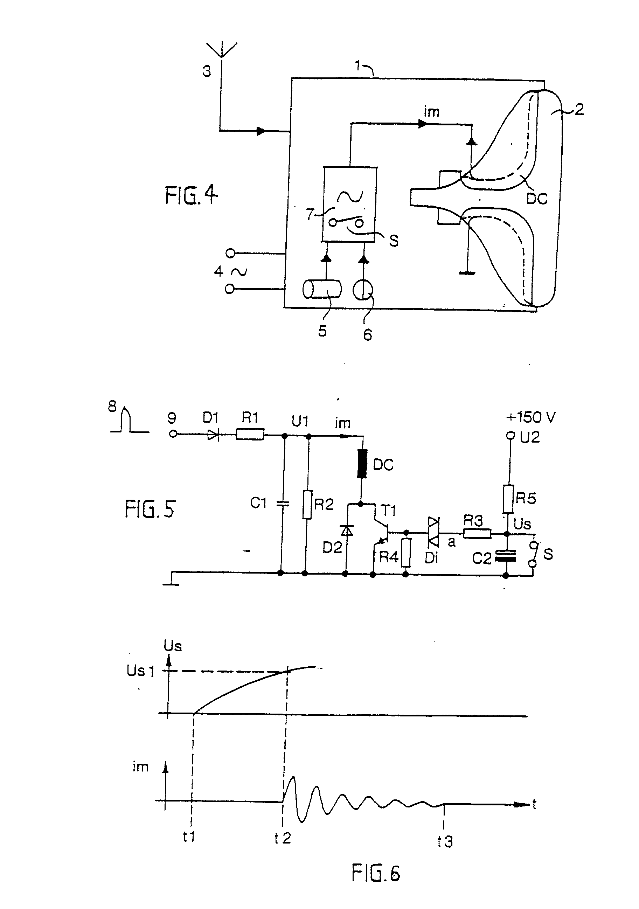

Figure 4 shows the principle of said embodiment in a simplified manner.

Figure 5 shows a detailed circuit for initiating the degaussing operation.

Figure 6 shows waveforms for describing the operation of the circuit according to Figure 5.

Figure 4 shows the cabinet 1 of a television receiver including a picture tube 2 carrying a degaussing coil DC. The receiver is connected to antenna 3 and a power supply 4. One or more movement detecting sensors are mounted within cabinet 1. In Figure 4, as an example only, two sensors 5, 6 are shown within cabinet 1. If only one sensor is present, then movement in one direction is detected. In Figure 4, said sensors 5, 6 detect movement of the cabinet 1 in two orthogonal directions. Output signals of sensors 5, 6 are fed to degaussing circuit 7 generating degaussing current im. In each case the sensors 5, 6 detect a movement of the cabinet 1 in the corresponding direction. The degaussing ciruit 7 is controlled in such a way that degaussing current im is initiated which decreases to zero nearly zero within a short interval, which is typically about 1 second. Initiating of the degaussing operation is indicated symbolically by switch S. For initiating degaussing operation a standby circuit may be used. This has the advantage that degaussing upon movement of the cabinet or upon change of magnetic field within the cabinet is initiated even if the receiver is not in on condition.

Figure 5 shows a circuit by which degaussing current with amplitude decreasing to zero can be inititated by actuating switch S. This circuit operates similar to circuit of Figure 1. Upon detection of movement switch S is opened. The switch S is closed to terminate tge degaussing operation and to prevent further degaussing action.

Figure 6 shows different waveforms in Figure 5. Assume that C1 is already charged to U1 and switch S is closed so taht Us is zero and Di does not fire. T1 is cut off and no degaussing current im can flow through DC. At time t1 switch S is opened for initiating degaussing operation. Voltage Us at C2 increases by the charging current from U2 via R5. At time t2 voltage Us reaches threshold value Us1. In this moment Di fires and transistor T1 becomes conductive so that degaussing current im is initiated.

At t3 degaussing current im decays to zero due to discharge of C1. For finishing degaussing operation and preventing further degaussing current switch S is closed so that Us decays to zero and T1 is turned off.

## Claims

1. Degaussing ciruit for a picture tube in a television device wherein upon initiating of degaussing operation an alternating current is fed to a degaussing coil the amplitude of said current smoothly decreasing to zero or to a low value, **characterized in that** said circuit includes means for initiating degaussing operation automatically and periodically during periods wherein degaussing current does not produce visible interference on the screen of the picture tube.

2. Circuit according to claim 1, **characterized in that** there are provided a capacitor charged by a first voltage via a first charging path and a first switch connecting the degaussing coil to said capacitor, said first switch being formed by an antiparallel circuit of a diode and a transistor and that a second capacitor is connected to the base of said tranistor and charged by a second voltage via a second charging path.

3. Circuit according to claim 2, **characterized in that** said first voltage is derived from the line flyback pulse at the collector of the power switching transistor of the line deflection output stage.

4. Circuit according to claim 1, **characterized by** means for securing that degaussing operation occurs only during vertical flyback period.

5. Circuit according to claim 4, **characterized by** a source of vertical flyback pulses connected to the base of said transistor.

6. Circuit according to claim 2, **characterized by** a second switch connected parallel to said second capacitor and means for opening said switch for initiating degaussing operation.

7. Circuit according to claim 1 **characterized in that** means (5,6) are provided for detecting a movement of the cabinet (1) of the device and/or changes of magnetic field within the device said means initiating degaussing operation.

8. Circuit according to claim 7, **characterized in that** said means include one or more gyros (5,6) or one or more pendulums with electrical contacts to detect movement or one or more mercury tilt switches or one or more switches actuated by movement.

9. Circuit according to claim 7, **characterized in that** said means detects movement and is also sensitive to changes in magnetic field.

10. Circuit according to claim 7, **characterized in that** degaussing operation is initiated by means of a standby circuit of the device.

Fig.1

Fig.2

Fig.3

FIG.4

FIG.5

FIG.6